(19) Europäisches Patentamt / European Patent Office / Office européen des brevets

(11) **EP 3 275 715 B1**

(12) **EUROPEAN PATENT SPECIFICATION**

(45) Date of publication and mention
of the grant of the patent:
**04.05.2022 Bulletin 2022/18**

(21) Application number: **16768653.4**

(22) Date of filing: **18.03.2016**

(51) International Patent Classification (IPC):
**B60K 31/00** *(2006.01)*    **B60W 30/14** *(2006.01)*
**B60W 40/105** *(2012.01)*    **B60W 50/00** *(2006.01)*

(52) Cooperative Patent Classification (CPC):
**B60W 30/143; B60K 31/00; B60W 40/105;**
**B60W 50/0097;** B60W 2050/0012;
B60W 2050/0014; B60W 2510/0666;
B60W 2510/1005; B60W 2520/10; B60W 2530/10;
B60W 2540/10; B60W 2540/12; B60W 2540/16;
B60W 2540/20; B60W 2552/15;          (Cont.)

(86) International application number:
**PCT/JP2016/058629**

(87) International publication number:
**WO 2016/152750 (29.09.2016 Gazette 2016/39)**

(54) **CRUISE CONTROL DEVICE AND CRUISE CONTROL METHOD**

FAHRGESCHWINDIGKEITREGELUNGSVORRICHTUNG UND
FAHRGESCHWINDIGKEITREGELUNGSVERFAHREN

DISPOSITIF ET PROCÉDÉ DE RÉGULATION DE VITESSE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **26.03.2015 JP 2015064244**

(43) Date of publication of application:
**31.01.2018 Bulletin 2018/05**

(73) Proprietor: **Isuzu Motors Limited**
**Tokyo 140-8722 (JP)**

(72) Inventors:
• **ISHIGURO, Shinichi**
**Fujisawa-shi**
**Kanagawa 252-0881 (JP)**
• **NISHIMURA, Nobuyuki**
**Fujisawa-shi**
**Kanagawa 252-0881 (JP)**
• **NISHIKIMI, Masao**
**Fujisawa-shi**
**Kanagawa 252-0881 (JP)**

(74) Representative: **Dennemeyer & Associates S.A.**
**Postfach 70 04 25**
**81304 München (DE)**

(56) References cited:
JP-A- H1 035 322          JP-A- S6 261 831
JP-A- 2006 137 235        JP-A- 2011 086 215
US-A1- 2010 198 450       US-A1- 2010 332 100
US-A1- 2011 106 388       US-A1- 2014 074 371
US-A1- 2015 006 055

(52) Cooperative Patent Classification (CPC): (Cont.)
B60W 2552/30; B60W 2554/801; B60W 2555/60;
B60W 2556/50; B60W 2710/0605; B60W 2720/10;
Y02T 10/40; Y02T 10/84

**Description**

Technical Field

The present invention relates to a travel control device and a travel control method for controlling a travel of a vehicle such that the vehicle speed is set to a target speed.

Background Art

Conventionally, auto-cruising techniques to maintain the speed (vehicle speed) of a vehicle such as an automobile at a target speed have been developed. For example, PTL 1 discloses an auto-cruising control device that prevents the vehicle speed from being varied at the time when the vehicle travels from a level ground into a slope so as not to make the passenger uncomfortable.

To be more specific, this auto-cruising control device images the forward area in the travelling direction of the vehicle with an imaging device, and detects the road grade from the obtained image. Then, the auto-cruising control device calculates a fuel injection amount which does not cause the variation of the vehicle speed from the road grade and the target speed, and drives the engine at that fuel injection amount from a position before the slope. Further, PTL 2 discloses a module and a method for determining at least one reference value for a vehicle's control system.

Citation List

Patent Literature

PTL 1
Japanese Patent Application Laid-Open No. 2010-234987
PTL 2
US 2015/006055 A1

Summary of Invention

Technical Problem

However, the above-described conventional technique disclosed in PTL 1 detects the road grade based on the image imaged with the imaging device, and therefore, in the case of a road including an upslope, a downslope and another upslope in this order, the road grade cannot be easily detected. As a result, there is a risk that the fuel injection amount is not appropriately calculated and the fuel economy is degraded.

To solve the above-mentioned problems, an object of the present invention is to provide a travel control device and a travel control method which can control the vehicle to go up an upslope road without degrading the fuel economy, and can shorten the period until the vehicle reaches the crest while avoiding an unnecessary downshift even in the case where the vehicle travels on an upslope road in which the road grade changes in a certain section.

Solution to Problem

To solve the above-mentioned problems, the invention provides a travel control device and travel control method as defined by the independent claims.

Advantageous Effects of Invention

According to the present invention, even in the case where the vehicle travels on an upslope road in which the road grade changes in a certain section, the vehicle can go up the upslope road without degrading the fuel economy, and the period until the vehicle reaches the crest can be shortened while avoiding an unnecessary downshift.

Brief Description of Drawings

FIG 1 is a block diagram illustrating an example configuration of an automatic travel device according to an embodiment of the present invention;

FIG 2 is a block diagram illustrating an example configuration of an automatic travel control device illustrated in FIG. 1;

FIG 3 illustrates an example of a process of determining the necessity to change the accelerator opening according to the embodiment of the present invention; and

FIG 4 is a flowchart of an example process of a travel control according to the embodiment of the present invention.

Description of Embodiments

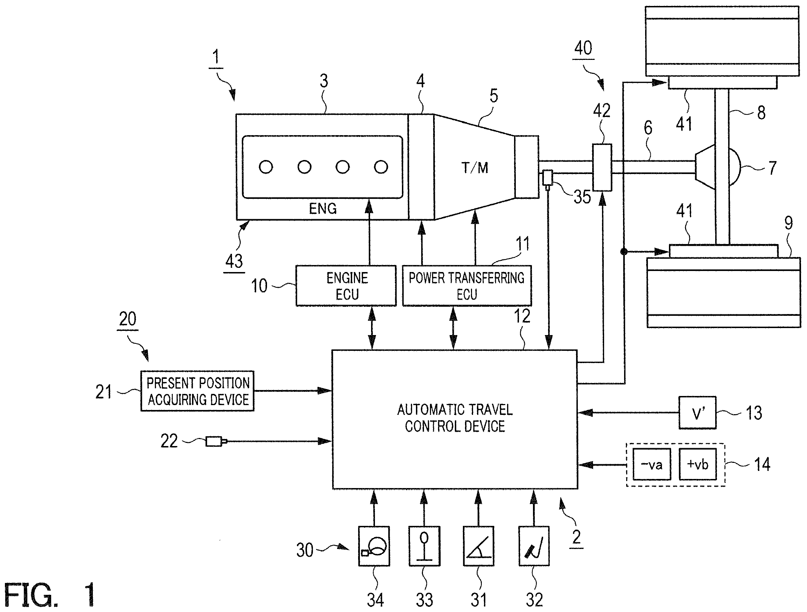

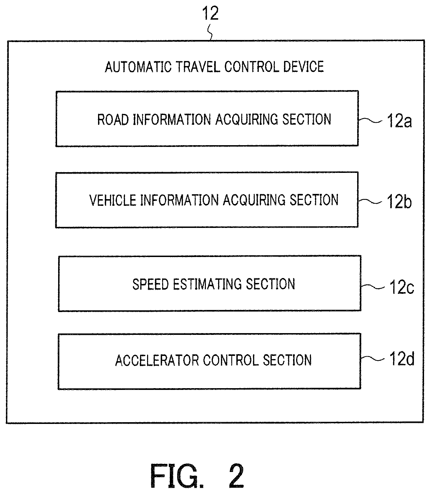

An embodiment of the present invention is described equal to or lower than with reference to the accompanying drawings. FIG 1 is a block diagram illustrating an example configuration of automatic travel device 2 according to the embodiment of the present invention. In addition, FIG. 2 is a block diagram illustrating an example configuration of automatic travel control device 12 illustrated in FIG. 1.

It is to be noted that, while engine 3 is an in-line six-cylinder diesel engine in FIG. 1, the present invention is applicable also to a gasoline engine, and the arrangement and the number of the cylinders are not limited. In addition, while vehicle 1 is a large vehicle such as a truck in which a diesel engine is mounted in the following description, the present invention is not limited to large vehicles such as trucks.

As illustrated in FIG. 1, in vehicle 1 in which automatic travel device 2 of the present embodiment is mounted, the power of engine 3 is transmitted to transmission 5 via clutch 4, and transmitted from transmission 5 to differential gear 7 through a propeller shaft 6, and further, transmitted from differential gear 7 to wheel 9 through drive shaft 8. In this manner, the power of engine 3 is transmitted to wheel 9, and thus vehicle 1 travels.

Automatic travel device 2 of the present embodiment controls the output of engine 3, the connection and disconnection of clutch 4, and the transmission of transmission 5 for the automatic travel of vehicle 1. Automatic travel device 2 includes a plurality of control devices.

To be more specific, automatic travel device 2 includes control engine ECU (engine control unit) 10 that controls the output of engine 3, power transferring ECU

(power transferring control unit) 11 that controls the connection and disconnection of clutch 4 and the transmission of transmission 5, and automatic travel control device 12 that controls the automatic travel of vehicle 1.

Each of engine ECU 10, power transferring ECU 11, and automatic travel control device 12 is composed of a micro controller. Engine ECU 10, power transferring ECU 11, and automatic travel control device 12 are connected with one another with an in-vehicle network, and required data and control signals are exchanged therebetween.

In addition, automatic travel device 2 includes, at a dashboard of a driver's seat not illustrated, target-vehicle speed setting device 13 and increment/reduction value setting device 14, and target-vehicle speed setting device 13 and increment/reduction value setting device 14 are connected with automatic travel control device 12.

Target-vehicle speed setting device 13 is a device that is manually operated by the driver before the automatic travel of vehicle 1 is started, to set target-vehicle speed V' [km/h] of vehicle 1 in the automatic travel. When target-vehicle speed V' is set in target-vehicle speed setting device 13 by the driver, the target-vehicle speed V' is transmitted to automatic travel control device 12, and stored in a storage device of automatic travel control device 12.

Increment/reduction value setting device 14 is a device that is operated by the driver before the automatic travel of vehicle 1 is started and after target-vehicle speed V' is set, to set both speed reduction value -va [km/h] and speed increment value +vb [km/h] of vehicle 1 in the automatic travel.

When both speed reduction value -va and speed increment value +vb are set in increment/reduction value setting device 14 by the driver, speed reduction value -va and speed increment value +vb are transmitted to automatic travel control device 12, and stored in a storage device of automatic travel control device 12.

In addition, automatic travel control device 12 adds speed reduction value -va and speed increment value +vb to target-vehicle speed V' to calculate lower limit target-vehicle speed Va' [km/h] and upper limit target-vehicle speed Vb' [km/h], and stores the calculated values in the storage device of automatic travel control device 12.

For example, in the case where target-vehicle speed V' is 80 km/h, speed reduction value -va is -5 km/h, and speed increment value +vb is +10 km/h, lower limit target-vehicle speed Va' is 75 km/h and upper limit target-vehicle speed Vb' is 90 km/h. It is to be noted that speed reduction value -va and speed increment value +vb may be set to zero.

Lower limit target-vehicle speed Va' and upper limit target-vehicle speed Vb' define a range of vehicle speed V [km/h] which can be accepted by the driver in the automatic travel of vehicle 1.

In addition, road information acquiring device 20 is a device for acquiring road information about the road ahead. The road ahead is the road extending from the present position of the vehicle in the travelling direction of the vehicle.

For example, road information acquiring device 20 includes present position acquiring device 21 that is a receiver of a global positioning system (GPS), and periphery sensor 22 that detects the distance from vehicles around the travelling vehicle such as a vehicle travelling ahead and/or a vehicle travelling on a side, and the difference in vehicle speed from other vehicles around the travelling vehicle.

Vehicle information acquiring device 30 is a device for acquiring vehicle information of vehicle 1. For example, vehicle information acquiring device 30 includes accelerator sensor 31 that detects the pressing amount of the accelerator pedal, brake switch 32 that detects the presence/absence of the pressing of the brake pedal, shift lever 33, turn-signal switch 34, and vehicle speed sensor 35 that detects vehicle speed V of vehicle 1. In addition, engine ECU 10 and power transferring ECU 11 are also included in vehicle information acquiring device 30.

Braking device 40 is a device for applying a braking force to vehicle 1. Braking device 40 includes foot brake 41, retarder 42, and auxiliary brake 43 such as an exhaust brake that is controlled with engine ECU 10 and/or power transferring ECU 11.

As illustrated in FIG. 2, automatic travel control device 12 includes road information acquiring section 12a, vehicle information acquiring section 12b, speed estimating section 12c, and accelerator control section 12d.

Road information acquiring section 12a acquires road information in a predetermined section ahead of the present point of vehicle 1.

To be more specific, road information acquiring section 12a determines the road ahead based on the present position acquired by present position acquiring device 21, map data stored in advance and the like, and acquires information about the road grade in a predetermined section of the acquired road ahead, the curve in the predetermined section of the road ahead, the presence/absence of traffic lights and the like. In addition, road information acquiring section 12a acquires information about the distance and the difference in vehicle speed from other travelling vehicles around the vehicle and the like, which is detected by periphery sensor 22.

It is to be noted that road information acquiring section 12a determines the predetermined section in accordance with the speed of vehicle 1. In line with the invention, the road information acquiring section 12a calculates a distance based on the product of the present vehicle speed and a predetermined time, and sets, as the predetermined section, a section corresponding to the distance from the present point of vehicle 1 in the road ahead.

Vehicle information acquiring section 12b acquires vehicle information required for the automatic travel of vehicle 1.

To be more specific, vehicle information acquiring section 12b acquires information about the pressing amount of the accelerator pedal detected by accelerator sensor 31, the presence/absence of the pressing of the brake pedal detected by brake switch 32, the operation of shift lever 33 and/or turn-signal switch 34, vehicle speed V of vehicle 1 detected by vehicle speed sensor 35, the output of engine 3 used in engine ECU 10 and power transferring ECU 11, the weight of vehicle 1, the transmission gear of transmission 5 and the like.

It is to be noted that the information acquired by road information acquiring section 12a and vehicle information acquiring section 12b is not limited to the above-mentioned information, and other information required for the automatic travel of vehicle 1 may be acquired. In addition, the devices provided in road information acquiring device 20 and/or vehicle information acquiring device 30 may be changed or additionally provided in accordance with the information to be acquired.

On the basis of the road information and the vehicle information, speed estimating section 12c estimates a transition of the speed of vehicle 1 in a predetermined section of the case where vehicle 1 travels with the maximum accelerator opening. The method of estimating the vehicle speed with speed estimating section 12c is described in detail later.

Accelerator control section 12d controls the accelerator to maximize the accelerator opening of the vehicle 1 when the maximum value of the vehicle speed in the predetermined section estimated by speed estimating section 12c is smaller than upper limit target vehicle speed Vb' and the minimum value of the speed estimated by speed estimating section 12c is smaller than target vehicle speed V'. Upper limit target vehicle speed Vb' and target vehicle speed V', which are vehicle speeds set by the driver, are obtained as vehicle information.

In this manner, by maximizing the accelerator opening at the time point when the speed is determined to be smaller than target vehicle speed V', the vehicle speed can be increased at an early stage, and an unnecessary downshift at an upslope road can be suppressed. As a result, fuel economy can be improved, and moreover the period until the vehicle reaches the crest can be shortened.

In addition, by maximizing the accelerator opening when the maximum value of the estimated vehicle speed is smaller than upper limit target vehicle speed Vb', it is possible to control vehicle 1 to go up an upslope road at a vehicle speed equal to or lower than the upper limit speed.

Further, by maximizing the accelerator opening, an unnecessary downshift at an upslope road can be further suppressed. As a result, fuel economy can be further improved, and the period until the vehicle reaches the crest can be further shortened.

Next, the method of estimating the vehicle speed with speed estimating section 12c is described. When the present vehicle speed is represented by $V_n$ [km/h], and the estimated vehicle speed at a position ahead by L [m] is represented by $V_{n+1}$ [km/h], the relationship between $V_n$ and $V_{n+1}$ is expressed by the Expression (1).

[Expression 1]

$$V_{n+1} = V_n + \Delta V_n \quad \cdots \quad (1)$$

Here, $\Delta V_n$ [km/h] is calculated with the Expression (2).
[Expression 2]

$$\Delta V_n = 3.6^2 \times (G - \theta/100) \times 9.81 \times L/V_n \quad \cdots \quad (2)$$

Here, $\theta$[%] is an average road grade from the present position to a position ahead of the present position by L. The average road grade is calculated from the above-described map data.
In addition, G [km/h$^2$] is the acceleration of the case where the vehicle travels with the present transmission gear and the maximum accelerator opening, and is calculated with the Expression (3).
[Expression 3]

$$G = \left[ tq \cdot rt \cdot rf \cdot \eta/tr - \left\{ (M \cdot rrc) + \left( arc \cdot V_n^{\,2} \right) \right\} \right]/M \quad \cdots \quad (3)$$

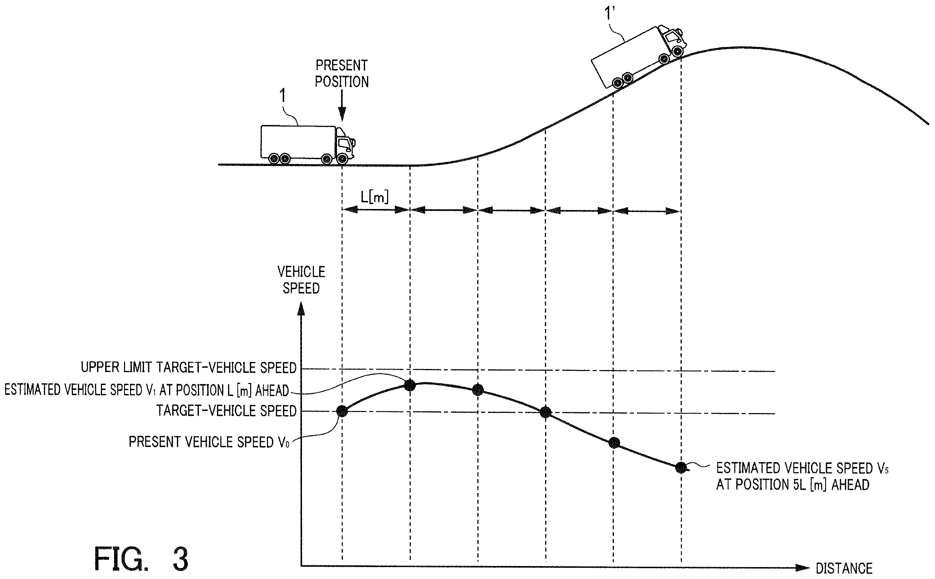

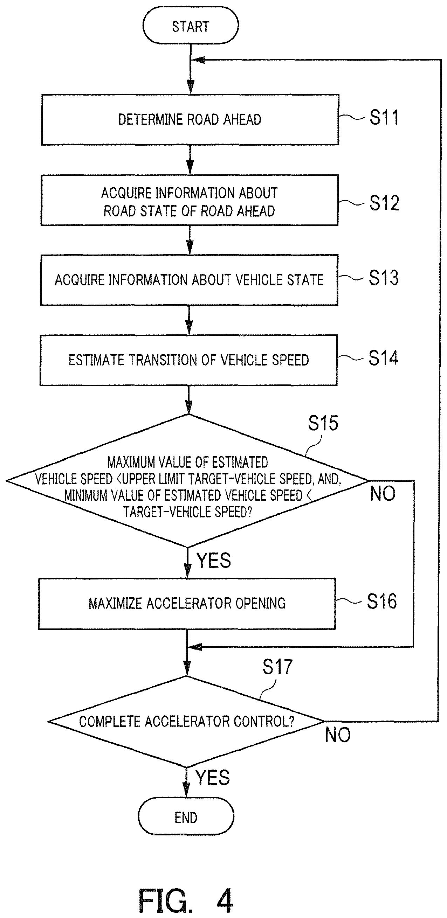

Here, tq [kgf· m] is the maximum torque of engine 3 of the case where the vehicle travels with the present transmission gear at vehicle speed $V_n$, rt the gear ratio of the present transmission gear, rf the gear ratio of the final gear, $\eta$ the transmission efficiency, tr [m] the tire radius, M [kg] the vehicle weight, rrc the roll resistance coefficient, and arc [kgf/(km/h)$^2$] the air resistance coefficient. These pieces of information are included in the vehicle information that is acquired by vehicle information acquiring section 12b.
By use of Expressions (1) to (3), speed estimating section 12c can estimate vehicle speed Vm of a position ahead of the present position by mL (m=1, 2, ⋯ ) with the present vehicle speed Vm as the initial value.
Next, an example process of determining the necessity to change the accelerator opening according to the embodiment of the present invention is described. FIG. 3 illustrates an example of the process of determining the necessity to change the accelerator opening according to the embodiment of the present invention.
FIG. 3 illustrates vehicle 1 travelling on a flat road, and vehicle 1' travelling on an upslope road ahead thereof by 5L. In addition, the graph of FIG. 3 shows a transition of an estimated vehicle speed.
In the case of FIG. 3, the maximum value of estimated speed $V_1$ is smaller than upper limit target vehicle speed Vb' and minimum value of estimated speed Vs is smaller than target vehicle speed V'. In this case, accelerator control section 12d determines that the accelerator opening should be maximized, and operates to maximize the accelerator opening at the present position of the vehicle, that is, at a positon on the flat road.
Next, an example process of the travel control according to the embodiment of the present invention is described. FIG. 4 is a flowchart of an example process of the travel control according to the embodiment of the present invention.
First, road information acquiring section 12a determines the road ahead (step S11), and acquires road information about the road ahead (step S12). Then, vehicle information acquiring section 12b acquires information about the vehicle state (step S13).
Subsequently, on the basis of the road information and the vehicle information, speed estimating section 12c estimates the transition of the vehicle speed of vehicle 1 in a predetermined section of the case where vehicle 1 travels with the maximum accelerator opening (step S14).
Next, accelerator control section 12d determines whether the maximum value of the vehicle speed estimated by speed estimating section 12c is smaller than upper limit target vehicle speed Vb' and the minimum value of the speed estimated by speed estimating section 12c is smaller than target vehicle speed V' (step S15).
Then, when the maximum value of the estimated vehicle speed is smaller than upper limit target vehicle speed Vb' and the minimum value of the estimated vehicle speed is smaller than target vehicle speed V' (YES at step S15), accelerator control section 12d controls the accelerator opening to maximize the accelerator opening at the present position of the vehicle, that is, at a positon on the flat road (step S16).
After step S16, or when a condition where the maximum value of the estimated vehicle speed is smaller than upper limit target vehicle speed Vb' and the minimum value of the estimated vehicle speed is smaller than target vehicle speed V' is not satisfied at step S15 (NO at step S15), accelerator control section 12d determines whether to complete the accelerator control (step S17).
For example, accelerator control section 12d determines that this transmission control is to be completed when the driver has requested completion of the automatic travel. Accelerator control section 12d determines that the accelerator control is not to be completed when the transmission gear is switched during the travel.
When accelerator control section 12d determines that the accelerator control is to be completed (YES at step S17), control section 12d completes the accelerator control. When accelerator control section 12d determines that the accelerator control is not to be completed (NO at step S17), the processes subsequent to step S11 are again performed.

While speed estimating section 12c estimates the transition of the vehicle speed of the case where vehicle 1 travels in a predetermined section of the road ahead with the present transmission gear and the maximum accelerator opening in the embodiment of the present invention described above, the present invention is not limited to this.

For example, speed estimating section 12c may estimate the transition of the vehicle speed of the case where the vehicle travels with an accelerator opening equal to or greater than the present accelerator opening, not the maximum accelerator opening.

Also in this case, when the maximum value of the vehicle speed estimated by speed estimating section 12c is smaller than upper limit target vehicle speed Vb' and the minimum value of the speed estimated by speed estimating section 12c is smaller than target vehicle speed V', accelerator control section 12d operates to maximize the accelerator opening at the present position of the vehicle, that is, at a positon on the flat road.

In addition, the condition where the maximum value of the vehicle speed is smaller than upper limit target vehicle speed Vb' may not be taken into consideration.

As described above, according to the present embodiment, in travel control device 12 that controls a travel of a vehicle such that a vehicle speed is set to a target speed, road information acquiring section 12a acquires information of a road in a predetermined section ahead of the vehicle that travels with an accelerator opening of a first opening; vehicle information acquiring section 12b acquires information of the vehicle; speed estimating section 12c estimates based on the information of the road and the information of the vehicle a transition of a vehicle speed in the predetermined section of a case where the vehicle travels with the accelerator opening of a second opening that is greater than the first opening; and accelerator control section 12d sets the accelerator opening of the vehicle to the second opening when a minimum value of the vehicle speed estimated by speed estimating section 12c is smaller than the target speed. With this configuration, even in the case where the vehicle travels on an upslope road in which the road grade changes in a certain section, the vehicle can go up the upslope road without degrading the fuel economy, and the period until the vehicle reaches the crest can be shortened while avoiding an unnecessary downshift.

In addition, according to the present embodiment, accelerator control section 12d controls the accelerator opening such that of the accelerator opening of vehicle 1 is set to the second opening when the maximum value of the vehicle speed estimated by speed estimating section 12c is smaller than a predetermined upper limit and the minimum value of the vehicle speed estimated by speed estimating section 12c is smaller than a target speed. With this configuration, it is possible to control vehicle 1 to go up an upslope road at a vehicle speed equal to or lower than the upper limit speed.

In addition, in the present embodiment, the second opening is a maximized opening. With this configuration, an unnecessary downshift at an upslope road can be further suppressed, fuel economy can be further improved, and the period until the vehicle reaches the crest can be further shortened.

In addition, in the present embodiment, road information acquiring section 12a determines the predetermined section in accordance with the present speed of the vehicle. With this configuration, the predetermined section for the vehicle speed estimation can be further appropriately changed.

Industrial Applicability

The present invention is applicable to a travel control device and a travel control method for controlling a travel of the vehicle such that the vehicle speed is set to a target speed.

Reference Signs List

    1 Vehicle
    2 Automatic travel device
    3 Engine
    4 Clutch
    5 Transmission
    10 Engine ECU (engine control unit)
    11 Power transferring ECU (power transferring control unit)
    12 Automatic travel control device
    12a Road information acquiring section
    12b Vehicle information acquiring section
    12c Speed estimating section
    12d Accelerator control section

13 Target-vehicle speed setting device
14 Increment/reduction value setting device
20 Road information acquiring device
30 Vehicle information acquiring device
40 Braking device

## Claims

1. A travel control device that controls a travel of a vehicle (1) such that a vehicle speed is set to a target speed, the travel control device comprising:

   a road information acquiring section (12a) that acquires information of a road in a predetermined section ahead of the vehicle that travels with an accelerator opening of a first opening;
   a vehicle information acquiring section (12b) that acquires information of the vehicle;
   a speed estimating section (12c) that estimates, based on the information of the road and the information of the vehicle, a transition of a vehicle speed in the predetermined section of a case where the vehicle travels with the accelerator opening of a second opening that is greater than the first opening; and
   an accelerator control section (12d) that sets the accelerator opening of the vehicle to the second opening when a minimum value of the transition of the vehicle speed estimated by the speed estimating section is smaller than the target speed, wherein
   the road information acquiring section calculates a distance based on the product of the present vehicle speed and a predetermined time, and sets, as the predetermined section, a section corresponding to the calculated distance as measured from the present point of the vehicle in the road ahead.

2. The travel control device according to claim 1, wherein the accelerator control section sets the accelerator opening of the vehicle to the second opening when a maximum value of the transition of the vehicle speed estimated by the speed estimating section (12d) is smaller than a predetermined upper limit and the minimum value of the transition of the vehicle speed estimated by the speed estimating section is smaller than the target speed.

3. The travel control device according to claim 1, wherein the second opening is a maximized opening.

4. The travel control device according to claim 1, wherein when a downshift is performed in the vehicle (1), the vehicle information acquiring section (12b) again acquires the information of the vehicle, and the speed estimating section (12c) again estimates the transition of the vehicle speed.

5. A travel control method for controlling a travel of a vehicle (1) such that a vehicle speed is set to a target speed, the method comprising:

   acquiring information of a road in a predetermined section ahead of the vehicle that travels with an accelerator opening of a first opening;
   acquiring information of the vehicle;
   estimating, based on the information of the road and the information of the vehicle, a transition of a vehicle speed in the predetermined section of a case where the vehicle travels with the accelerator opening of a second opening that is greater than the first opening; and
   setting the accelerator opening of the vehicle to the second opening when a minimum value of the transition of the vehicle speed estimated by the estimating is smaller than the target speed, wherein
   a distance of the predetermined section is calculated based on the product of the present vehicle speed and a predetermined time.

## Patentansprüche

1. Fahrtregelungsvorrichtung, die eine Fahrt eines Fahrzeugs (1) derart steuert, dass eine Fahrzeuggeschwindigkeit auf eine Zielgeschwindigkeit eingestellt ist, wobei die Fahrtregelungsvorrichtung umfasst:

   einen Straßeninformationsermittlungsabschnitt (12a), der Informationen über eine Straße in einem vorbestimmten Abschnitt vor dem Fahrzeug, das mit einer Gaspedalöffnung bei einer ersten Öffnung fährt, ermittelt;

einen Fahrzeuginformationsermittlungsabschnitt (12b), der Informationen über das Fahrzeug ermittelt;

einen Geschwindigkeitsschätzungsabschnitt (12c), der basierend auf den Informationen über die Straße und den Informationen über das Fahrzeug einen Übergang einer Fahrzeuggeschwindigkeit in dem vorbestimmten Abschnitt in einem Fall schätzt, in dem das Fahrzeug mit der Gaspedalöffnung bei einer zweiten Öffnung fährt, die größer als die erste Öffnung ist; und

einen Gaspedalregelungsabschnitt (12d), der die Gaspedalöffnung des Fahrzeugs auf die zweite Öffnung einstellt, wenn ein Mindestwert des Übergangs der Fahrzeuggeschwindigkeit, die von dem Geschwindigkeitsschätzungsabschnitt geschätzt wird, kleiner ist als die Zielgeschwindigkeit, wobei

der Straßeninformationsermittlungsabschnitt einen Abstand basierend auf dem Produkt der aktuellen Fahrzeuggeschwindigkeit und einer vorbestimmten Zeit berechnet und als den vorbestimmten Abschnitt einen Abschnitt, der dem berechneten Abstand, gemessen von dem aktuellen Punkt des Fahrzeugs, auf der Straße davor entspricht, einstellt.

2. Fahrtregelungsvorrichtung nach Anspruch 1, wobei der Gaspedalregelungsabschnitt die Gaspedalöffnung des Fahrzeugs auf die zweite Öffnung einstellt, wenn ein Höchstwert des Übergangs der Fahrzeuggeschwindigkeit, der von dem Geschwindigkeitsschätzungsabschnitt (12d) geschätzt wird, kleiner ist als eine vorbestimmte obere Grenze, und der Mindestwert des Übergangs der Fahrzeuggeschwindigkeit, der von dem Geschwindigkeitsschätzungsabschnitt geschätzt wird, kleiner ist als die Zielgeschwindigkeit.

3. Fahrtregelungsvorrichtung nach Anspruch 1, wobei die zweite Öffnung eine maximierte Öffnung ist.

4. Fahrtregelungsvorrichtung nach Anspruch 1, wobei, wenn ein Herunterschalten in dem Fahrzeug (1) ausgeführt wird, der Fahrzeuginformationsermittlungsabschnitt (12b) die Informationen über das Fahrzeug erneut ermittelt, und der Geschwindigkeitsschätzungsabschnitt (12c) den Übergang der Fahrzeuggeschwindigkeit erneut schätzt.

5. Fahrtregelungsverfahren zum Steuern einer Fahrt eines Fahrzeugs (1) derart, dass eine Fahrzeuggeschwindigkeit auf eine Zielgeschwindigkeit eingestellt wird, wobei das Verfahren umfasst:

Ermitteln von Informationen über eine Straße in einem vorbestimmten Abschnitt vor dem Fahrzeug, das mit einer Gaspedalöffnung bei einer ersten Öffnung fährt;

Ermitteln von Informationen über das Fahrzeug;

basierend auf den Informationen über die Straße und den Informationen über das Fahrzeug, Schätzen eines Übergangs einer Fahrzeuggeschwindigkeit in dem vorbestimmten Abschnitt in einem Fall, in dem das Fahrzeug mit der Gaspedalöffnung bei einer zweiten Öffnung fährt, die größer als die erste Öffnung ist; und

Einstellen der Gaspedalöffnung des Fahrzeugs auf die zweite Öffnung, wenn ein Mindestwert des Übergangs der Fahrzeuggeschwindigkeit, der von dem Schätzen geschätzt wird, kleiner ist als die Zielgeschwindigkeit, wobei

ein Abstand des vorbestimmten Abschnitts basierend auf dem Produkt der aktuellen Fahrzeuggeschwindigkeit und einer vorbestimmten Zeit berechnet wird.

**Revendications**

1. Dispositif de commande de déplacement qui commande le déplacement d'un véhicule (1), de sorte qu'une vitesse de véhicule soit réglée sur une vitesse cible, le dispositif de commande de déplacement comprenant :

une section d'acquisition d'informations routières (12a) qui acquiert des informations sur une route dans une section prédéterminée située devant le véhicule qui se déplace selon une première ouverture d'accélérateur ;

une section d'acquisition d'informations sur le véhicule (12b) qui acquiert des informations sur le véhicule ;

une section d'estimation de vitesse (12c) qui estime, sur la base des informations sur la route et des informations sur le véhicule, une transition de vitesse d'un véhicule dans la section prédéterminée lorsque le véhicule se déplace selon une seconde ouverture d'accélérateur supérieure à la première ouverture ; et

une section de commande d'accélérateur (12d) qui règle l'ouverture d'accélérateur du véhicule sur la seconde ouverture lorsqu'une valeur minimum de la transition de vitesse du véhicule estimée par la section d'estimation de vitesse est inférieure à la vitesse cible, dans lequel

la section d'acquisition d'informations routières calcule une distance sur la base du produit de la vitesse actuelle de véhicule et d'une durée prédéterminée et définit, en tant que section prédéterminée, une section qui correspond à la distance calculée, mesurée depuis l'emplacement actuel du véhicule sur la route située devant.

**2.** Dispositif de commande de déplacement selon la revendication 1, dans lequel la section de commande d'accélérateur règle l'ouverture d'accélérateur du véhicule sur la seconde ouverture lorsqu'une valeur maximum de transition de la vitesse de véhicule estimée par la section d'estimation de vitesse (12d) est inférieure à une limite supérieure prédéterminée et la valeur minimum de transition de la vitesse de véhicule estimée par la section d'estimation de vitesse est inférieure à la vitesse cible.

**3.** Dispositif de commande de déplacement selon la revendication 1, dans lequel la seconde ouverture est une ouverture maximisée.

**4.** Dispositif de commande de déplacement selon la revendication 1, dans lequel, lorsqu'un passage à un rapport inférieur est effectué sur le véhicule (1), la section d'acquisition d'informations sur le véhicule (12b) acquiert à nouveau les informations sur le véhicule et la section d'estimation de vitesse (12c) estime à nouveau la transition de la vitesse de véhicule.

**5.** Procédé de commande de déplacement destiné à commander le déplacement d'un véhicule (1), de sorte qu'une vitesse de véhicule soit réglée sur une vitesse cible, le procédé comprenant :

l'acquisition d'informations sur une route dans une section prédéterminée située devant le véhicule qui se déplace selon une première ouverture d'accélérateur ;
l'acquisition d'informations sur le véhicule ;
l'estimation, sur la base des informations sur la route et des informations sur le véhicule, d'une transition d'une vitesse de véhicule dans la section prédéterminée lorsque le véhicule se déplace selon une seconde ouverture d'accélérateur supérieure à la première ouverture ; et
le réglage de l'ouverture d'accélérateur du véhicule sur la seconde ouverture lorsqu'une valeur minimum de la transition de la vitesse de véhicule estimée par l'estimation est inférieure à la vitesse cible, dans lequel
une distance de la section prédéterminée est calculée sur la base du produit de la vitesse actuelle de véhicule et d'une durée prédéterminée.

FIG. 1

EP 3 275 715 B1

12

AUTOMATIC TRAVEL CONTROL DEVICE

ROAD INFORMATION ACQUIRING SECTION — 12a

VEHICLE INFORMATION ACQUIRING SECTION — 12b

SPEED ESTIMATING SECTION — 12c

ACCELERATOR CONTROL SECTION — 12d

FIG. 2

FIG. 3

EP 3 275 715 B1

**FIG. 4**

**REFERENCES CITED IN THE DESCRIPTION**

**Patent documents cited in the description**

- JP 2010234987 A

- US 2015006055 A1